# EUROPEAN PATENT APPLICATION

(11) **EP 4 654 202 A1**
(43) Date of publication of application: **26.11.2025**
(21) Application number: 25178421.1
(22) Date of filing: 23.05.2025
(51) Int. Cl.: G11C 17/16, G11C 17/18, G06F 21/00

(54) **TECHNOLOGIES FOR MULTIPLE-TIME PROGRAMMABLE FUSES**

(30) Priority: 24.05.2024 US 202418674224
(71) Applicant: Intel Corporation, Santa Clara, CA 95054 (US)
(72) Inventor: CHANG, Yao-Feng, Gilbert, 85298 (US)
(74) Representative: 2SPL Patentanwälte PartG mbB

(57) **Abstract**

Technologies for multiple-time reprogrammable fuses are disclosed. In an illustrative embodiment, an electronic fuse in an integrated circuit component may be written a first time, blowing the fuse. The fuse may then be read many times during normal operation. At a later time, the fuse may have a write operation performed on it again. The write operation does not further disturb the state of the fuse, allowing for the fuse to continue to be read without error, even after several write cycles.

## Description

### BACKGROUND

One-time programmable read-only memory (ROM, or PROM) continues to be a key technology among embedded memory categories. Product applications, such as reconfigurable ROM, root-of-trust implementations (memory redundancy), on-chip security keys, and unit-level traceability require the OTP ROM to support high density with reliable, available, and affordable information storage. However, fuse elements are typically only programmed one time, which imposes limitations on how they are used.

### BRIEF DESCRIPTION OF THE DRAWINGS

FIG. 1 is an isometric view of an integrated circuit component.
FIG. 2 is a cross-sectional view of one embodiment of the integrated circuit component of FIG. 1.
FIG. 3 is a simplified circuit diagram for an electronic fuse that may be in the integrated circuit component of FIG. 1.
FIG. 4 is a top-down view of one embodiment of an electronic fuse that has not been blown.
FIG. 5 is a top-down view of one embodiment of an electronic fuse that has not been blown.
FIG. 6 illustrates a simplified block diagram of one embodiment of a compute device.
FIG. 7 is a simplified flow diagram of at least one embodiment of a method for performing multiple read and write cycles on an electronic fuse.
FIG. 8 is a top view of a wafer and dies that may be included in a microelectronic assembly, in accordance with any of the embodiments disclosed herein.
FIG. 9 is a cross-sectional side view of an integrated circuit device that may be included in a microelectronic assembly, in accordance with any of the embodiments disclosed herein.
FIGS. 10A-10D are perspective views of example planar, gate-all-around, and stacked gate-all-around transistors.
FIG. 11 is a cross-sectional side view of an integrated circuit device assembly that may include a microelectronic assembly, in accordance with any of the embodiments disclosed herein.
FIG. 12 is a block diagram of an example electrical device that may include a microelectronic assembly, in accordance with any of the embodiments disclosed herein.

### DETAILED DESCRIPTION

In various embodiments disclosed herein, an integrated circuit component includes electronic fuses. In use, the electronic fuses initially include a small strip of material that has a high conductivity. The state of the electronic fuse can be changed by blowing the fuse, which changes the conductivity to a low conductivity. For example, a fuse may be blown by applying a high voltage across the small strip of material. The state of the fuse can be sensed by directly or indirectly sensing the conductivity of the fuse. In some embodiments, a compute device that includes the integrated circuit component may perform a write operation on the same fuse several times, such as by applying a high voltage across the small strip of material several times. The fuse can still be read in the correct state even after a write operation is performed on it several times.

As used herein, the phrase "communicatively coupled" refers to the ability of a component to send a signal to or receive a signal from another component. The signal can be any type of signal, such as an input signal, an output signal, or a power signal. A component can send or receive a signal to another component to which it is communicatively coupled via a wired or wireless communication medium (e.g., conductive traces, conductive contacts, air). Examples of components that are communicatively coupled include integrated circuit dies located in the same package that communicate via an embedded bridge in a package substrate and an integrated circuit component attached to a printed circuit board that send signals to or receives signals from other integrated circuit components or electronic devices attached to the printed circuit board.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or any other manner. "Connected" may indicate elements are in direct physical or electrical contact, and "coupled" may indicate elements co-operate or interact, but they may or may not be in direct physical or electrical contact. Furthermore, the terms "comprising," "including," "having," and the like, as used with respect to embodiments of the present disclosure, are synonymous. Terms modified by the word "substantially" include arrangements, orientations, spacings, or positions that vary slightly from the meaning of the unmodified term. For example, the central axis of a magnetic plug that is substantially coaxially aligned with a through hole may be misaligned from a central axis of the through hole by several degrees. In another example, a substrate assembly feature, such as a through width, that is described as having substantially a listed dimension can vary within a few percent of the listed dimension. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

It will be understood that in the examples shown and described further below, the figures may not be drawn to scale and may not include all possible layers and/or circuit components. In addition, it will be understood that although certain figures illustrate transistor designs with source/drain regions, electrodes, etc. having orthogonal (e.g., perpendicular) boundaries, embodiments herein may implement such boundaries in a substantially orthogonal manner (e.g., within +/- 5 or 10 degrees of orthogonality) due to fabrication methods used to create such devices or for other reasons.

Reference is now made to the drawings, which are not necessarily drawn to scale, wherein similar or same numbers may be used to designate the same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives within the scope of the claims.

As used herein, the phrase "located on" in the context of a first layer or component located on a second layer or component refers to the first layer or component being directly physically attached to the second part or component (no layers or components between the first and second layers or components) or physically attached to the second layer or component with one or more intervening layers or components.

As used herein, the term "adjacent" refers to layers or components that are in physical contact with each other. That is, there is no layer or component between the stated adjacent layers or components. For example, a layer X that is adjacent to a layer Y refers to a layer that is in physical contact with layer Y.

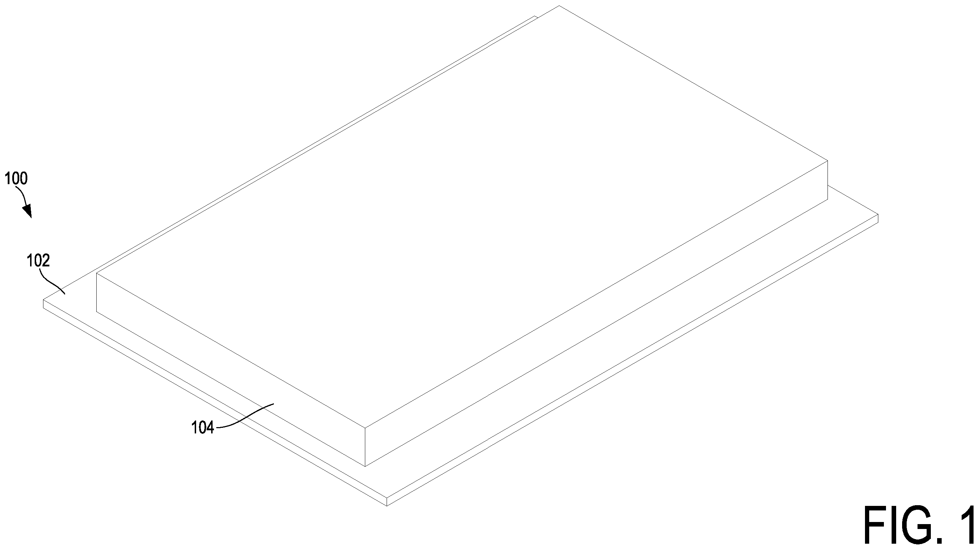

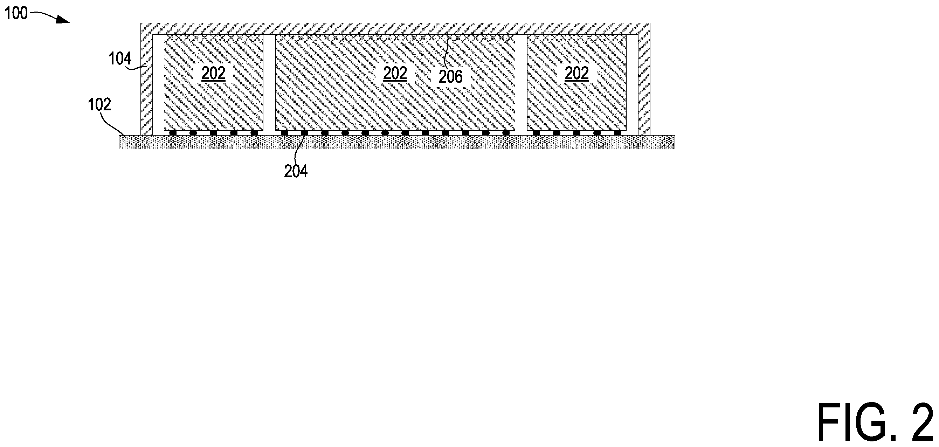

Referring now to FIGS. 1-2, in one embodiment, an integrated circuit component 100 includes a circuit board 102, one or more integrated circuit (IC) dies 202, and an integrated heat spreader (IHS) 104. FIG. 1 shows a perspective view of the integrated circuit component 100, and FIG. 2 shows a cross-sectional view of one embodiment of the integrated circuit component 100. In an illustrative embodiment, the one or more IC dies 202 are mounted on the circuit board 102. The integrated circuit component 100 may include other components, such as additional IC dies, components such as capacitors, inductors, voltage regulators, etc.

In an illustrative embodiment, the ICs 202 are connected to the circuit board 102 with solder balls 204. A thermal interface material (TIM) 206 is between the IC dies 202 and the IHS 104. The TIM 206 may be any suitable material, such as a silver thermal compound.

The illustrative circuit board 102 may be made from ceramic, glass, and/or organic-based materials with fiberglass and resin, such as FR-4. The circuit board 102 may have any suitable length or width, such as 10-500 millimeters. The circuit board 102 may have any suitable thickness, such as 0.2-5 millimeters. The circuit board 102 may support additional components besides the components shown in FIGS. 1-2, such as additional photonic or electronic integrated circuit components, a memory device, additional circuit components, etc.

The one or more IC dies 202 may include any suitable electronic integrated circuit component, such as resistors, capacitors, inductors, transistors, etc. The one or more IC dies 202 may include any suitable analog and/or digital circuitry, such as a processor, a memory, an application-specific integrated circuit (ASIC), a field-programmable gate array (FPGA), etc. The IC dies 202 may have any suitable length or width, such as 1-300 millimeters. The IC dies 202 may have any suitable thickness, such as 0.05-5 millimeters. The IHS 104 may be made of any suitable material with a high thermal conductivity, such as copper, aluminum, other metals, metal alloys, coated metals, combinations of metals, etc.

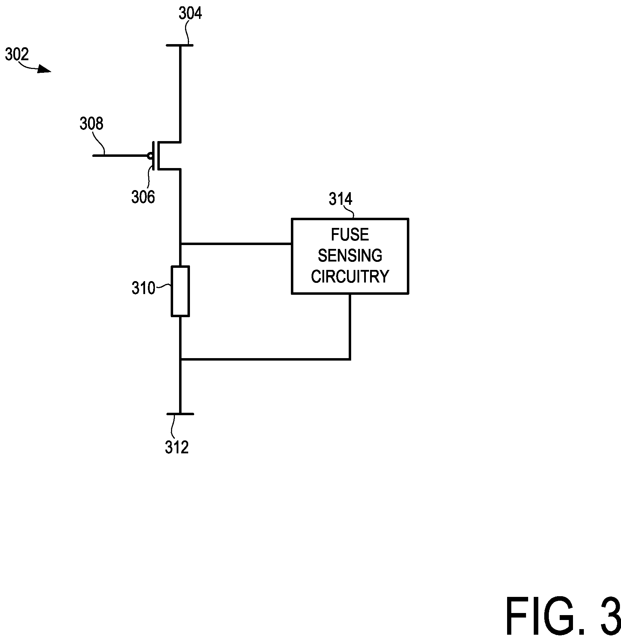

Referring now to FIG. 3, in one embodiment, a simple circuit diagram 302 shows one embodiment of performing a write operation on an electronic fuse 310. In an illustrative embodiment, a high-voltage source 304 is connected to a transistor 306. A fuse 310 is connected between the transistor 306 and a ground 312. Fuse sensing circuitry 314 may be connected across the fuse 310. In use, a signal may be provided on line 308 to connect the high voltage source 304 to the fuse 310, which will cause a large current to flow through the fuse 310, blowing the fuse 310.

The fuse 310 may be any suitable type of electronic fuse. The fuse 310 may include a thin conductive link of any suitable material, such as metal, polysilicon, or other conductive compound. The fuse 310 may be blown by the conductive material melting due to the high current, creating an open circuit. In some embodiments, the fuse 310 may be blown using electromigration, in which the applied current causes atoms in the conductive material to migrate, altering the material's structure and increasing its resistance significantly. In another embodiment, the fuse 310 may be blown through oxidation of the conductive material, increasing its resistance and effectively breaking the circuit. The fuse 310 may be located in any suitable location in an integrated circuit die, such as on an interconnect layer, such as an M3 layer. The fuse 310 may be written by any suitable voltage amount, such as a voltage of about 1.8 volts. A voltage pulse may be applied to a fuse 310 for any suitable amount of time, such as about 20 microseconds.

In an illustrative embodiment, the fuse 310 may be one of an array of fuses, such as 1-10⁶ fuses. Each fuse 310 may be individually addressable, such as by having an array of bit lines and word lines that can be used to select individual fuses 310 for reading and/or writing. Each fuse 310 may have any suitable size, such as a length and/or width of 0.5-10 micrometers.

The state of the fuse 310 may be determined in any suitable manner, such as by using Separate circuitry, such as circuitry to directly or indirectly sense a conductivity of the fuse 310, may be included as well (not shown in FIG. 3). For example, a small voltage may be applied across the fuse 310, and the current through the fuse 310 may be measured. If the current is above a threshold, the state of the fuse 310 is measured as one value, and if the current is below a threshold, the state of the fuse 310 is measured as another value. In some embodiments, a blown fuse 310 may be considered a 1, and an intact fuse 310 may be considered a 0. In other embodiments, a blown fuse 310 may be considered a 0, and an intact fuse 310 may be considered a 1.

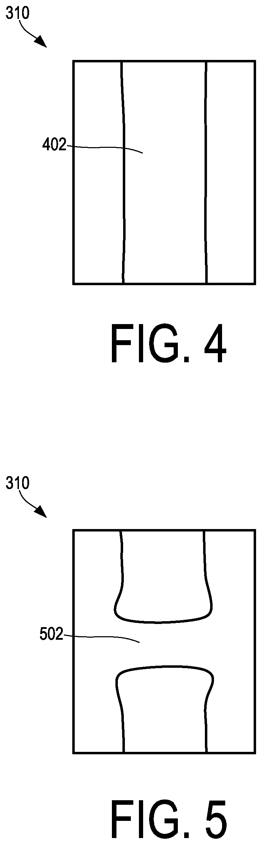

Referring now to FIGS. 4 and 5, in one embodiment, a top-down view of an intact fuse 310 with an intact strip 402 is shown in FIG. 4, and a top-down view of a blown fuse 310 with a strip with a gap 502 in it is shown in FIG. 5. The intact strip 402 may be blown and turn into a strip with a gap 502 in any suitable manner, such as by being heated up due to current passing through the strip.

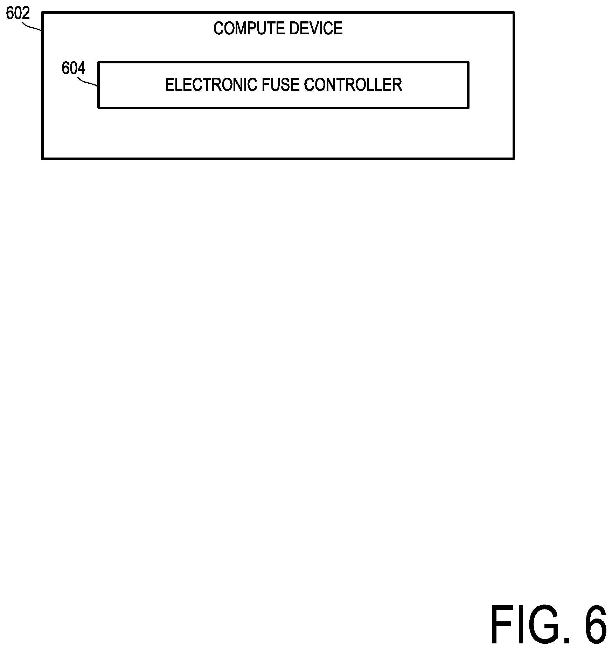

Referring now to FIG. 6, in one embodiment, a compute device 602 includes electronic fuse controller 604 and may include additional modules not shown. Some of the modules of the compute device 602, such as the electronic fuse controller 604, may be embodied as hardware, software, firmware, or a combination thereof. For example, the various modules, logic, and other components of the compute device 602 may form a portion of, or otherwise be established by, a processor, memory, data storage, or other hardware components of a computing device, such as the electrical device 1200 described below. The compute device 602 may be embodied as, e.g., a system-on-a-chip or a system-on-a-package.

In some embodiments, one or more of the modules of the compute device 602 may be embodied as circuitry or collection of electrical devices. It should be appreciated that, in such embodiments, one or more of the circuits may form a portion of one or more of the processor, the memory, the data storage and/or other components of a computing device. For example, in some embodiments, some or all of the modules may be embodied as or include a processor as well as memory and/or data storage storing instructions to be executed by the processor. Additionally, in some embodiments, one or more of the illustrative modules may form a portion of another module and/or one or more of the illustrative modules may be independent of one another. Further, in some embodiments, one or more of the modules of the compute device 602 may be embodied as virtualized hardware components or emulated architecture, which may be established and maintained by the processor or other components of a computing device. It should be appreciated that some of the functionality of one or more of the modules of the compute device 602 may require a hardware implementation, in which case embodiments of modules that implement such functionality will be embodied at least partially as hardware.

In one embodiment, the electronic fuse controller 604 is configured to control an array of fuses 310. The electronic fuse controller 604 may control the fuses 310 for any suitable purpose, such as reconfigurable read-only memory, root-of-trust implementations, on-chip security keys, unit-level traceability, etc. In some embodiments, the electronic fuse controller 604 may include, interface with, or otherwise be embodied as firmware, software, or hardware.

In use, the electronic fuse controller 604 may perform a write operation on at least some of the fuses 310 in the array, blowing the fuses 310 and setting their values. Blowing the fuses 310 may also be referred to as setting the fuses 310. As the fuses cannot be "un-blown," once a fuse 310 is set, it cannot be cleared.

In some cases, it may be desirable to perform an additional write operation, such as when updating or reinstalling firmware. The additional write operation does not change the state of the fuse 310, but it may be included as part of, e.g., a reinitialization of a compute device 602. In an illustrative embodiment, the electronic fuse controller 604 may allow multiple write operations on each fuse 310, such as 2-10 write operations. In some operations, the electronic fuse controller 604 may not limit the number of write operations on each fuse 310. Between each write operation, a large number of read operations may be performed, such as 1-10,000 read operations. For example, a read operation may be performed every time the compute device 602 is powered on.

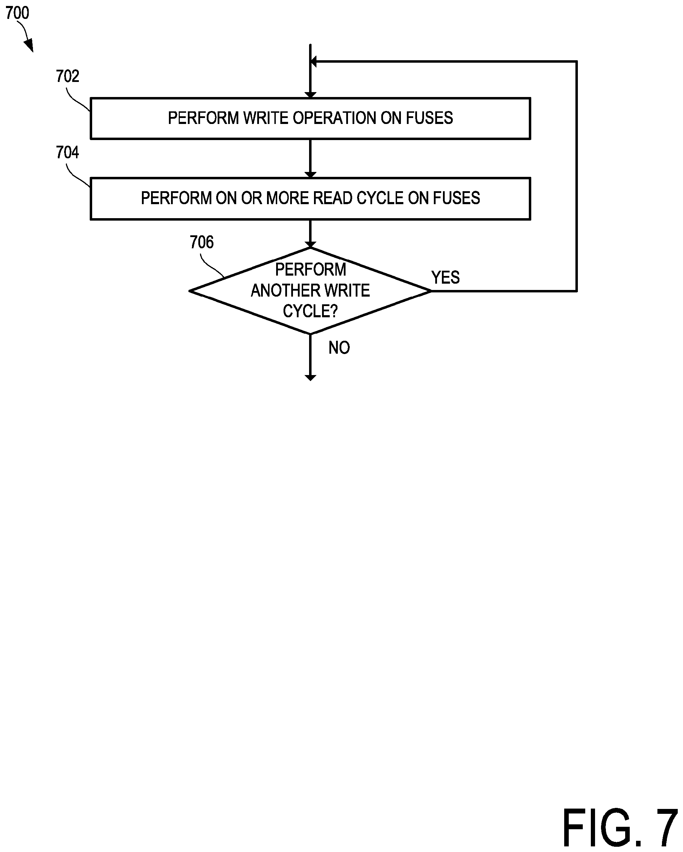

Referring now to FIG. 7, in one embodiment, a flowchart for a method 700 for controlling fuses 310 in a compute device 602 is shown. The method begins in block 702, in which the compute device 602 performs a write operation on one or more fuses 310. As discussed above in more detail, a write operation may be performed by, e.g., connecting a high voltage source across a fuse 310, passing a high current through the fuse 310, causing a gap 502 in a strip due to thermal effects from the high current. In some embodiments, the compute device 602 may write a test pattern on an array of fuses 310. The compute device 602 may use any suitable programming pattern, such as a checkerboard pattern or a 50% high-density row low-density column (HDR_LDC) pattern.

In block 704, the compute device 602 may perform one or more read cycles on the fuses 310, such as 1-10,000 read operations. In some embodiments, the compute device 602 may do so by running a stress test program on the fuses 310. In block 706, if another write cycle is to be performed, the method 700 loops back to block 702 to perform another write operation. It should be appreciated that, in some embodiments, a large amount of time, such as one month to ten years, may take place in between times when the fuse is written.

In one test, 230 fuses 310 were tested with four write operations, with a large number of read operations in between each write operation. No error was detected in any read cycle, and all fuses 310 were ready correctly at a minimum temperature of -40°C and at a maximum temperature of 110°C. Generally, the fuses 310 may be read at any temperature in a temperature range, such as any temperature between -40°C and 110°C. In another test, several fuses 310 were tested with varying numbers of write operations, with a high number of read operations in between each write operation. After testing, the fuses 310 were examined, and no change in the voids for the fuses 310 was found across the fuses written different numbers of times. In the tests, the 230 fuses met the Joint Electron Device Engineering Council (JEDEC) JP001 specification.

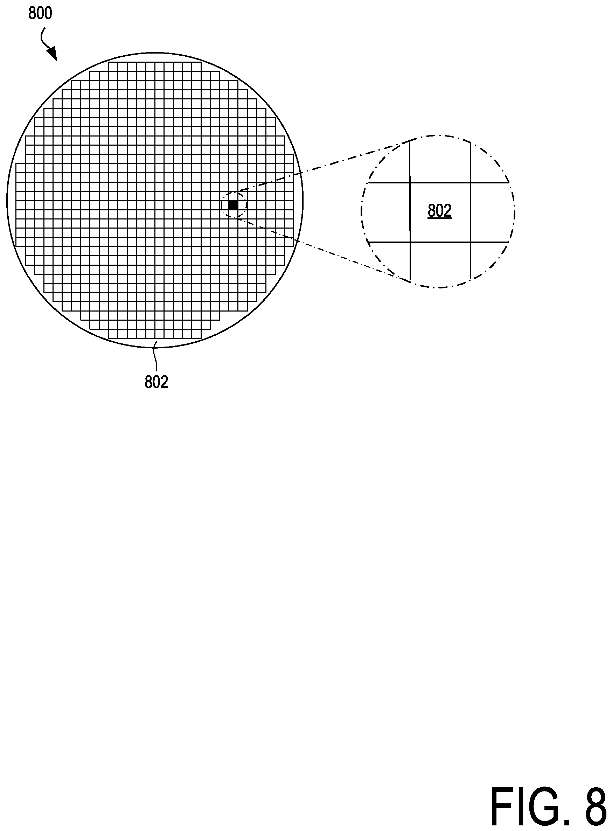

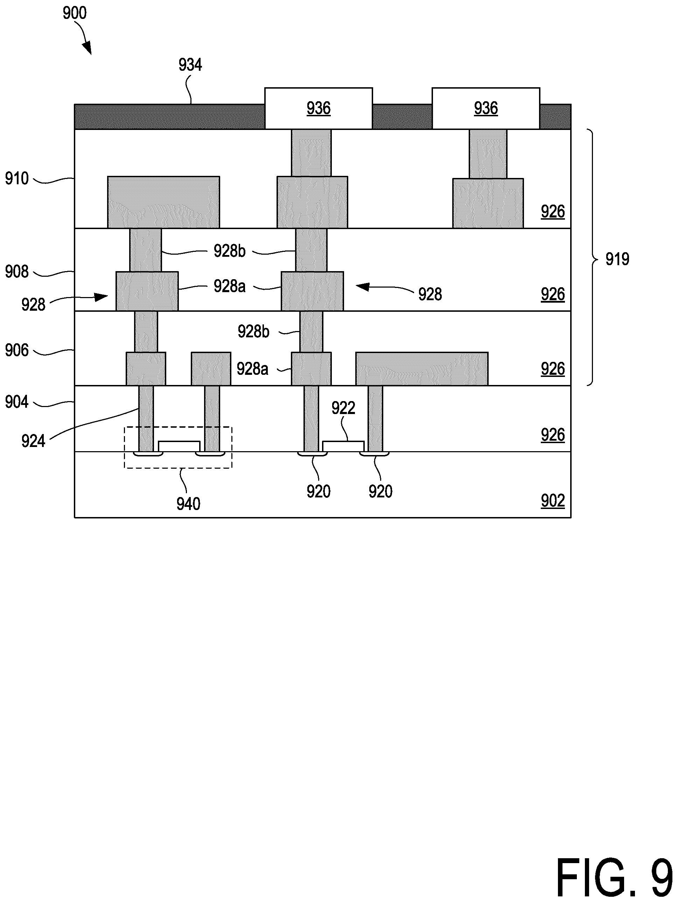

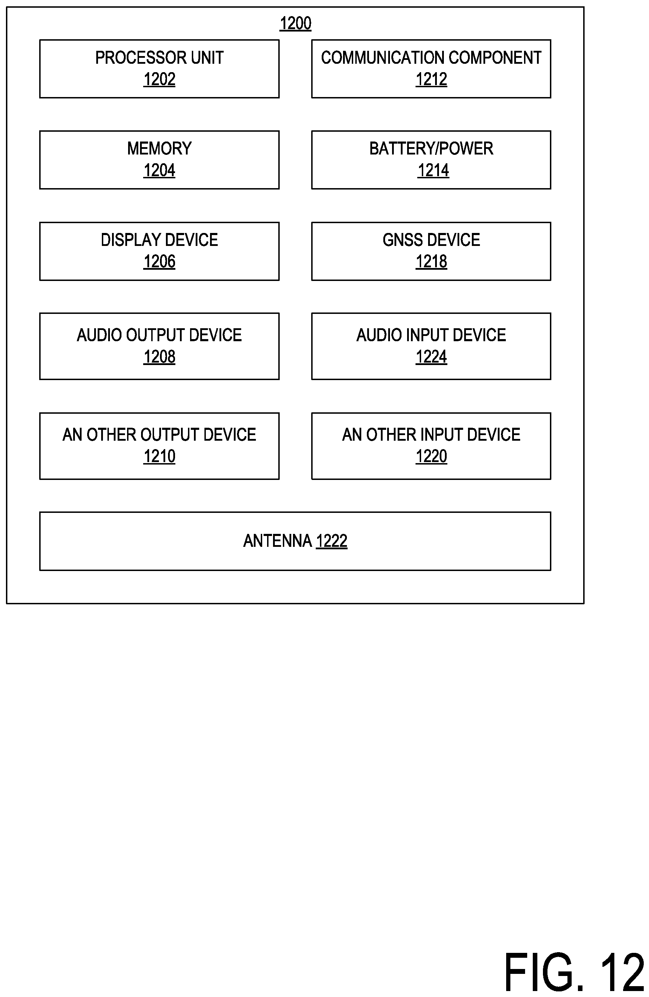

FIG. 8 is a top view of a wafer 800 and dies 802 that may be included in any of the integrated circuit components 100 disclosed herein (e.g., as any suitable ones of the dies 202). The wafer 800 may be composed of semiconductor material and may include one or more dies 802 having integrated circuit structures formed on a surface of the wafer 800. The individual dies 802 may be a repeating unit of an integrated circuit product that includes any suitable integrated circuit. After the fabrication of the semiconductor product is complete, the wafer 800 may undergo a singulation process in which the dies 802 are separated from one another to provide discrete "chips" of the integrated circuit product. The die 802 may be any of the dies 202 disclosed herein. The die 802 may include one or more transistors (e.g., some of the transistors 940 of FIG. 9, discussed below), supporting circuitry to route electrical signals to the transistors, passive components (e.g., signal traces, resistors, capacitors, or inductors), and/or any other integrated circuit components. In some embodiments, the wafer 800 or the die 802 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 802. For example, a memory array formed by multiple memory devices may be formed on a same die 802 as a processor unit (e.g., the processor unit 1202 of FIG. 12) or other logic that is configured to store information in the memory devices or execute instructions stored in the memory array. Various ones of the integrated circuit components 100 disclosed herein may be manufactured using a die-to-wafer assembly technique in which some dies 202 are attached to a wafer 800 that include others of the dies 202, and the wafer 800 is subsequently singulated.

FIG. 9 is a cross-sectional side view of an integrated circuit device 900 that may be included in any of the integrated circuit components 100 disclosed herein (e.g., in any of the dies 202). One or more of the integrated circuit devices 900 may be included in one or more dies 802 (FIG. 8). The integrated circuit device 900 may be formed on a die substrate 902 (e.g., the wafer 800 of FIG. 8) and may be included in a die (e.g., the die 802 of FIG. 8). The die substrate 902 may be a semiconductor substrate composed of semiconductor material systems including, for example, n-type or p-type materials systems (or a combination of both). The die substrate 902 may include, for example, a crystalline substrate formed using a bulk silicon or a silicon-on-insulator (SOI) substructure. In some embodiments, the die substrate 902 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 902. Although a few examples of materials from which the die substrate 902 may be formed are described here, any material that may serve as a foundation for an integrated circuit device 900 may be used. The die substrate 902 may be part of a singulated die (e.g., the dies 802 of FIG. 8) or a wafer (e.g., the wafer 800 of FIG. 8).

The integrated circuit device 900 may include one or more device layers 904 disposed on the die substrate 902. The device layer 904 may include features of one or more transistors 940 (e.g., metal oxide semiconductor field-effect transistors (MOSFETs)) formed on the die substrate 902. The transistors 940 may include, for example, one or more source and/or drain (S/D) regions 920, a gate 922 to control current flow between the S/D regions 920, and one or more S/D contacts 924 to route electrical signals to/from the S/D regions 920. The transistors 940 may include additional features not depicted for the sake of clarity, such as device isolation regions, gate contacts, and the like. The transistors 940 are not limited to the type and configuration depicted in FIG. 9 and may include a wide variety of other types and configurations such as, for example, planar transistors, non-planar transistors, or a combination of both. Non- planar transistors may include FinFET transistors, such as double-gate transistors or tri-gate transistors, and wrap-around or all-around gate transistors, such as nanoribbon, nanosheet, or nanowire transistors.

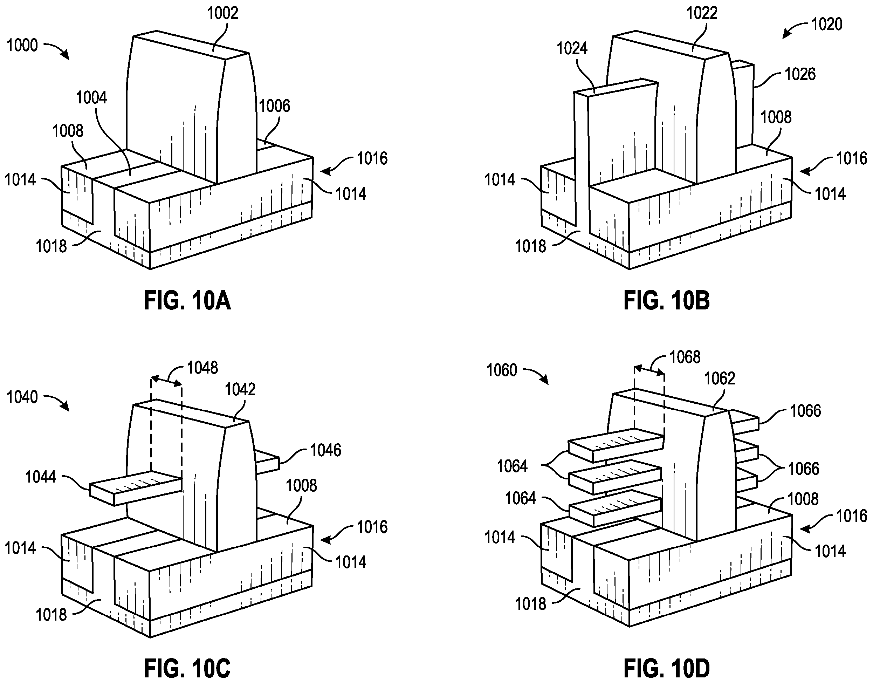

FIGS. 10A-10D are simplified perspective views of example planar, FinFET, gate-all-around, and stacked gate-all-around transistors. The transistors illustrated in FIGS. 10A-10D are formed on a substrate 1016 having a surface 1008. Isolation regions 1014 separate the source and drain regions of the transistors from other transistors and from a bulk region 1018 of the substrate 1016.

FIG. 10A is a perspective view of an example planar transistor 1000 comprising a gate 1002 that controls current flow between a source region 1004 and a drain region 1006. The transistor 1000 is planar in that the source region 1004 and the drain region 1006 are planar with respect to the substrate surface 1008.

FIG. 10B is a perspective view of an example FinFET transistor 1020 comprising a gate 1022 that controls current flow between a source region 1024 and a drain region 1026. The transistor 1020 is non-planar in that the source region 1024 and the drain region 1026 comprise "fins" that extend upwards from the substrate surface 1028. As the gate 1022 encompasses three sides of the semiconductor fin that extends from the source region 1024 to the drain region 1026, the transistor 1020 can be considered a tri-gate transistor. FIG. 10B illustrates one S/D fin extending through the gate 1022, but multiple S/D fins can extend through the gate of a FinFET transistor.

FIG. 10C is a perspective view of a gate-all-around (GAA) transistor 1040 comprising a gate 1042 that controls current flow between a source region 1044 and a drain region 1046. The transistor 1040 is non-planar in that the source region 1044 and the drain region 1046 are elevated from the substrate surface 1028.

FIG. 10D is a perspective view of a GAA transistor 1060 comprising a gate 1062 that controls current flow between multiple elevated source regions 1064 and multiple elevated drain regions 1066. The transistor 1060 is a stacked GAA transistor as the gate controls the flow of current between multiple elevated S/D regions stacked on top of each other. The transistors 1040 and 1060 are considered gate-all-around transistors as the gates encompass all sides of the semiconductor portions that extends from the source regions to the drain regions. The transistors 1040 and 1060 can alternatively be referred to as nanowire, nanosheet, or nanoribbon transistors depending on the width (e.g., widths 1048 and 1068 of transistors 1040 and 1060, respectively) of the semiconductor portions extending through the gate.

Returning to FIG. 9, a transistor 940 may include a gate 922 formed of at least two layers, a gate dielectric and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 940 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 940 along the source-channel-drain direction, the gate electrode may consist of a U-shaped structure that includes a bottom portion substantially parallel to the surface of the die substrate 902 and two sidewall portions that are substantially perpendicular to the top surface of the die substrate 902. In other embodiments, at least one of the metal layers that form the gate electrode may simply be a planar layer that is substantially parallel to the top surface of the die substrate 902 and does not include sidewall portions substantially perpendicular to the top surface of the die substrate 902. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 920 may be formed within the die substrate 902 adjacent to the gate 922 of individual transistors 940. The S/D regions 920 may be formed using an implantation/diffusion process or an etching/deposition process, for example. In the former process, dopants such as boron, aluminum, antimony, phosphorous, or arsenic may be ion-implanted into the die substrate 902 to form the S/D regions 920. An annealing process that activates the dopants and causes them to diffuse farther into the die substrate 902 may follow the ion-implantation process. In the latter process, the die substrate 902 may first be etched to form recesses at the locations of the S/D regions 920. An epitaxial deposition process may then be carried out to fill the recesses with material that is used to fabricate the S/D regions 920. In some implementations, the S/D regions 920 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 920 may be formed using one or more alternate semiconductor materials such as germanium or a group III-V material or alloy. In further embodiments, one or more layers of metal and/or metal alloys may be used to form the S/D regions 920.

Electrical signals, such as power and/or input/output (I/O) signals, may be routed to and/or from the devices (e.g., transistors 940) of the device layer 904 through one or more interconnect layers disposed on the device layer 904 (illustrated in FIG. 9 as interconnect layers 906-910). For example, electrically conductive features of the device layer 904 (e.g., the gate 922 and the S/D contacts 924) may be electrically coupled with the interconnect structures 928 of the interconnect layers 906-910. The one or more interconnect layers 906-910 may form a metallization stack (also referred to as an "ILD stack") 919 of the integrated circuit device 900.

The interconnect structures 928 may be arranged within the interconnect layers 906-910 to route electrical signals according to a wide variety of designs; in particular, the arrangement is not limited to the particular configuration of interconnect structures 928 depicted in FIG. 9. Although a particular number of interconnect layers 906-910 is depicted in FIG. 9, embodiments of the present disclosure include integrated circuit devices having more or fewer interconnect layers than depicted.

In some embodiments, the interconnect structures 928 may include lines 928a and/or vias 928b filled with an electrically conductive material such as a metal. The lines 928a may be arranged to route electrical signals in a direction of a plane that is substantially parallel with a surface of the die substrate 902 upon which the device layer 904 is formed. For example, the lines 928a may route electrical signals in a direction in and out of the page and/or in a direction across the page. The vias 928b may be arranged to route electrical signals in a direction of a plane that is substantially perpendicular to the surface of the die substrate 902 upon which the device layer 904 is formed. In some embodiments, the vias 928b may electrically couple lines 928a of different interconnect layers 906-910 together.

The interconnect layers 906-910 may include a dielectric material 926 disposed between the interconnect structures 928, as shown in FIG. 9. In some embodiments, dielectric material 926 disposed between the interconnect structures 928 in different ones of the interconnect layers 906-910 may have different compositions; in other embodiments, the composition of the dielectric material 926 between different interconnect layers 906-910 may be the same. The device layer 904 may include a dielectric material 926 disposed between the transistors 940 and a bottom layer of the metallization stack as well. The dielectric material 926 included in the device layer 904 may have a different composition than the dielectric material 926 included in the interconnect layers 906-910; in other embodiments, the composition of the dielectric material 926 in the device layer 904 may be the same as a dielectric material 926 included in any one of the interconnect layers 906-910.

A first interconnect layer 906 (referred to as Metal 1 or "M1") may be formed directly on the device layer 904. In some embodiments, the first interconnect layer 906 may include lines 928a and/or vias 928b, as shown. The lines 928a of the first interconnect layer 906 may be coupled with contacts (e.g., the S/D contacts 924) of the device layer 904. The vias 928b of the first interconnect layer 906 may be coupled with the lines 928a of a second interconnect layer 908.

The second interconnect layer 908 (referred to as Metal 2 or "M2") may be formed directly on the first interconnect layer 906. In some embodiments, the second interconnect layer 908 may include via 928b to couple the lines 928 of the second interconnect layer 908 with the lines 928a of a third interconnect layer 910. Although the lines 928a and the vias 928b are structurally delineated with a line within individual interconnect layers for the sake of clarity, the lines 928a and the vias 928b may be structurally and/or materially contiguous (e.g., simultaneously filled during a dual-damascene process) in some embodiments.

The third interconnect layer 910 (referred to as Metal 3 or "M3") (and additional interconnect layers, as desired) may be formed in succession on the second interconnect layer 908 according to similar techniques and configurations described in connection with the second interconnect layer 908 or the first interconnect layer 906. In some embodiments, the interconnect layers that are "higher up" in the metallization stack 919 in the integrated circuit device 900 (i.e., farther away from the device layer 904) may be thicker that the interconnect layers that are lower in the metallization stack 919, with lines 928a and vias 928b in the higher interconnect layers being thicker than those in the lower interconnect layers.

The integrated circuit device 900 may include a solder resist material 934 (e.g., polyimide or similar material) and one or more conductive contacts 936 formed on the interconnect layers 906-910. In FIG. 9, the conductive contacts 936 are illustrated as taking the form of bond pads. The conductive contacts 936 may be electrically coupled with the interconnect structures 928 and configured to route the electrical signals of the transistor(s) 940 to external devices. For example, solder bonds may be formed on the one or more conductive contacts 936 to mechanically and/or electrically couple an integrated circuit die including the integrated circuit device 900 with another component (e.g., a printed circuit board). The integrated circuit device 900 may include additional or alternate structures to route the electrical signals from the interconnect layers 906-910; for example, the conductive contacts 936 may include other analogous features (e.g., posts) that route the electrical signals to external components.

In some embodiments in which the integrated circuit device 900 is a double-sided die, the integrated circuit device 900 may include another metallization stack (not shown) on the opposite side of the device layer(s) 904. This metallization stack may include multiple interconnect layers as discussed above with reference to the interconnect layers 906-910, to provide conductive pathways (e.g., including conductive lines and vias) between the device layer(s) 904 and additional conductive contacts (not shown) on the opposite side of the integrated circuit device 900 from the conductive contacts 936.

In other embodiments in which the integrated circuit device 900 is a double-sided die, the integrated circuit device 900 may include one or more through silicon vias (TSVs) through the die substrate 902; these TSVs may make contact with the device layer(s) 904, and may provide conductive pathways between the device layer(s) 904 and additional conductive contacts (not shown) on the opposite side of the integrated circuit device 900 from the conductive contacts 936. In some embodiments, TSVs extending through the substrate can be used for routing power and ground signals from conductive contacts on the opposite side of the integrated circuit device 900 from the conductive contacts 936 to the transistors 940 and any other components integrated into the die 900, and the metallization stack 919 can be used to route I/O signals from the conductive contacts 936 to transistors 940 and any other components integrated into the die 900.

Multiple integrated circuit devices 900 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

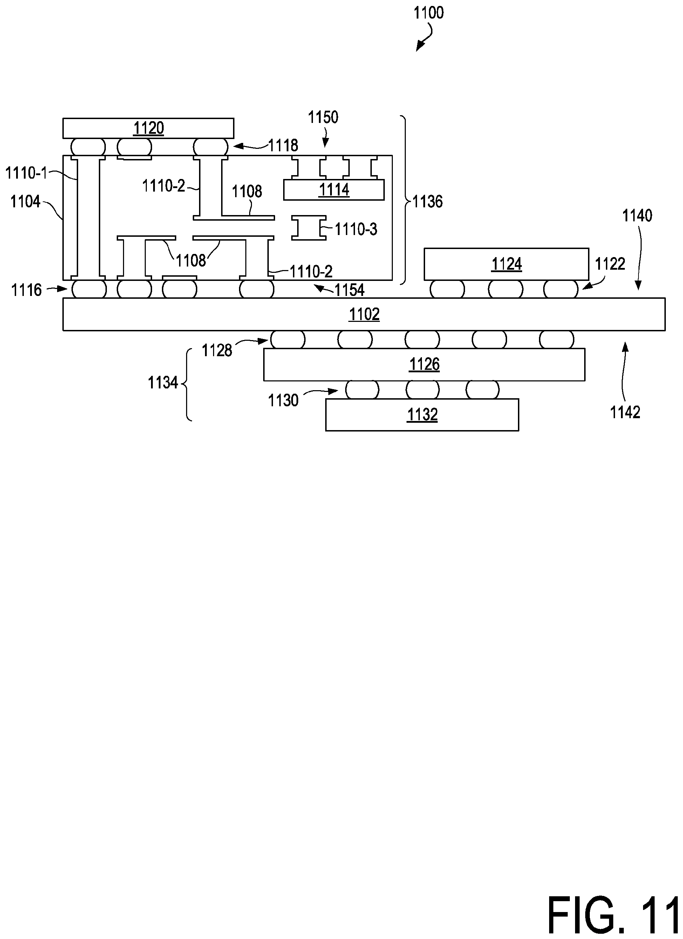

FIG. 11 is a cross-sectional side view of an integrated circuit device assembly 1100 that may include any of the integrated circuit components 100 disclosed herein. In some embodiments, the integrated circuit device assembly 1100 may be an integrated circuit component 100. The integrated circuit device assembly 1100 includes a number of components disposed on a circuit board 1102 (which may be a motherboard, system board, mainboard, etc.). The integrated circuit device assembly 1100 includes components disposed on a first face 1140 of the circuit board 1102 and an opposing second face 1142 of the circuit board 1102; generally, components may be disposed on one or both faces 1140 and 1142. Any of the integrated circuit components discussed below with reference to the integrated circuit device assembly 1100 may take the form of any suitable ones of the embodiments of the integrated circuit components 100 disclosed herein.

In some embodiments, the circuit board 1102 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1102. In other embodiments, the circuit board 1102 may be a non-PCB substrate. In some embodiments the circuit board 1102 may be, for example, the circuit board 102. The integrated circuit device assembly 1100 illustrated in FIG. 11 includes a package-on-interposer structure 1136 coupled to the first face 1140 of the circuit board 1102 by coupling components 1116. The coupling components 1116 may electrically and mechanically couple the package-on-interposer structure 1136 to the circuit board 1102, and may include solder balls (as shown in FIG. 11), pins (e.g., as part of a pin grid array (PGA), contacts (e.g., as part of a land grid array (LGA)), male and female portions of a socket, an adhesive, an underfill material, and/or any other suitable electrical and/or mechanical coupling structure. The coupling components 1116 may serve as the coupling components illustrated or described for any of the substrate assembly or substrate assembly components described herein, as appropriate.

The package-on-interposer structure 1136 may include an integrated circuit component 1120 coupled to an interposer 1104 by coupling components 1118. The coupling components 1118 may take any suitable form for the application, such as the forms discussed above with reference to the coupling components 1116. Although a single integrated circuit component 1120 is shown in FIG. 11, multiple integrated circuit components may be coupled to the interposer 1104; indeed, additional interposers may be coupled to the interposer 1104. The interposer 1104 may provide an intervening substrate used to bridge the circuit board 1102 and the integrated circuit component 1120.

The integrated circuit component 1120 may be a packaged or unpacked integrated circuit product that includes one or more integrated circuit dies (e.g., the die 802 of FIG. 8, the integrated circuit device 900 of FIG. 9) and/or one or more other suitable components. A packaged integrated circuit component comprises one or more integrated circuit dies mounted on a package substrate with the integrated circuit dies and package substrate encapsulated in a casing material, such as a metal, plastic, glass, or ceramic. In one example of an unpackaged integrated circuit component 1120, a single monolithic integrated circuit die comprises solder bumps attached to contacts on the die. The solder bumps allow the die to be directly attached to the interposer 1104. The integrated circuit component 1120 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 1120 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 1120 comprises multiple integrated circuit dies, they dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 1120 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof.

Generally, the interposer 1104 may spread connections to a wider pitch or reroute a connection to a different connection. For example, the interposer 1104 may couple the integrated circuit component 1120 to a set of ball grid array (BGA) conductive contacts of the coupling components 1116 for coupling to the circuit board 1102. In the embodiment illustrated in FIG. 11, the integrated circuit component 1120 and the circuit board 1102 are attached to opposing sides of the interposer 1104; in other embodiments, the integrated circuit component 1120 and the circuit board 1102 may be attached to a same side of the interposer 1104. In some embodiments, three or more components may be interconnected by way of the interposer 1104.

In some embodiments, the interposer 1104 may be formed as a PCB, including multiple metal layers separated from one another by layers of dielectric material and interconnected by electrically conductive vias. In some embodiments, the interposer 1104 may be formed of an epoxy resin, a fiberglass-reinforced epoxy resin, an epoxy resin with inorganic fillers, a ceramic material, or a polymer material such as polyimide. In some embodiments, the interposer 1104 may be formed of alternate rigid or flexible materials that may include the same materials described above for use in a semiconductor substrate, such as silicon, germanium, and other group III-V and group IV materials. The interposer 1104 may include metal interconnects 1108 and vias 1110, including but not limited to through hole vias 1110-1 (that extend from a first face 1150 of the interposer 1104 to a second face 1154 of the interposer 1104), blind vias 1110-2 (that extend from the first or second faces 1150 or 1154 of the interposer 1104 to an internal metal layer), and buried vias 1110-3 (that connect internal metal layers).

In some embodiments, the interposer 1104 can comprise a silicon interposer. Through silicon vias (TSV) extending through the silicon interposer can connect connections on a first face of a silicon interposer to an opposing second face of the silicon interposer. In some embodiments, an interposer 1104 comprising a silicon interposer can further comprise one or more routing layers to route connections on a first face of the interposer 1104 to an opposing second face of the interposer 1104.

The interposer 1104 may further include embedded devices 1114, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1104. The package-on-interposer structure 1136 may take the form of any of the package-on-interposer structures known in the art.

The integrated circuit device assembly 1100 may include an integrated circuit component 1124 coupled to the first face 1140 of the circuit board 1102 by coupling components 1122. The coupling components 1122 may take the form of any of the embodiments discussed above with reference to the coupling components 1116, and the integrated circuit component 1124 may take the form of any of the embodiments discussed above with reference to the integrated circuit component 1120.

The integrated circuit device assembly 1100 illustrated in FIG. 11 includes a package-on-package structure 1134 coupled to the second face 1142 of the circuit board 1102 by coupling components 1128. The package-on-package structure 1134 may include an integrated circuit component 1126 and an integrated circuit component 1132 coupled together by coupling components 1130 such that the integrated circuit component 1126 is disposed between the circuit board 1102 and the integrated circuit component 1132. The coupling components 1128 and 1130 may take the form of any of the embodiments of the coupling components 1116 discussed above, and the integrated circuit components 1126 and 1132 may take the form of any of the embodiments of the integrated circuit component 1120 discussed above. The package-on-package structure 1134 may be configured in accordance with any of the package-on-package structures known in the art.

FIG. 12 is a block diagram of an example electrical device 1200 that may include one or more of the integrated circuit components 100 disclosed herein. For example, any suitable ones of the components of the electrical device 1200 may include one or more of the integrated circuit device assemblies 1100, integrated circuit components 1120, integrated circuit devices 900, or integrated circuit dies 802 disclosed herein, and may be arranged in any of the integrated circuit components 100 disclosed herein. A number of components are illustrated in FIG. 12 as included in the electrical device 1200, but any one or more of these components may be omitted or duplicated, as suitable for the application. In some embodiments, some or all of the components included in the electrical device 1200 may be attached to one or more motherboards mainboards, or system boards. In some embodiments, one or more of these components are fabricated onto a single system-on-a-chip (SoC) die.

Additionally, in various embodiments, the electrical device 1200 may not include one or more of the components illustrated in FIG. 12, but the electrical device 1200 may include interface circuitry for coupling to the one or more components. For example, the electrical device 1200 may not include a display device 1206, but may include display device interface circuitry (e.g., a connector and driver circuitry) to which a display device 1206 may be coupled. In another set of examples, the electrical device 1200 may not include an audio input device 1224 or an audio output device 1208, but may include audio input or output device interface circuitry (e.g., connectors and supporting circuitry) to which an audio input device 1224 or audio output device 1208 may be coupled.

The electrical device 1200 may include one or more processor units 1202 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1202 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 1200 may include a memory 1204, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1204 may include memory that is located on the same integrated circuit die as the processor unit 1202. This memory may be used as cache memory (e.g., Level 1 (L1), Level 2 (L2), Level 3 (L3), Level 4 (L4), Last Level Cache (LLC)) and may include embedded dynamic random access memory (eDRAM) or spin transfer torque magnetic random access memory (STT-MRAM).

In some embodiments, the electrical device 1200 can comprise one or more processor units 1202 that are heterogeneous or asymmetric to another processor unit 1202 in the electrical device 1200. There can be a variety of differences between the processing units 1202 in a system in terms of a spectrum of metrics of merit including architectural, microarchitectural, thermal, power consumption characteristics, and the like. These differences can effectively manifest themselves as asymmetry and heterogeneity among the processor units 1202 in the electrical device 1200.

In some embodiments, the electrical device 1200 may include a communication component 1212 (e.g., one or more communication components). For example, the communication component 1212 can manage wireless communications for the transfer of data to and from the electrical device 1200. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 1212 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1212 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1212 may operate in accordance with other wireless protocols in other embodiments. The electrical device 1200 may include an antenna 1222 to facilitate wireless communications and/or to receive other wireless communications (such as AM or FM radio transmissions).

In some embodiments, the communication component 1212 may manage wired communications, such as electrical, optical, or any other suitable communication protocols (e.g., IEEE 802.3 Ethernet standards). As noted above, the communication component 1212 may include multiple communication components. For instance, a first communication component 1212 may be dedicated to shorter-range wireless communications such as Wi-Fi or Bluetooth, and a second communication component 1212 may be dedicated to longer-range wireless communications such as global positioning system (GPS), EDGE, GPRS, CDMA, WiMAX, LTE, EV-DO, or others. In some embodiments, a first communication component 1212 may be dedicated to wireless communications, and a second communication component 1212 may be dedicated to wired communications.

The electrical device 1200 may include battery/power circuitry 1214. The battery/power circuitry 1214 may include one or more energy storage devices (e.g., batteries or capacitors) and/or circuitry for coupling components of the electrical device 1200 to an energy source separate from the electrical device 1200 (e.g., AC line power).

The electrical device 1200 may include a display device 1206 (or corresponding interface circuitry, as discussed above). The display device 1206 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1200 may include an audio output device 1208 (or corresponding interface circuitry, as discussed above). The audio output device 1208 may include any embedded or wired or wirelessly connected external device that generates an audible indicator, such as speakers, headsets, or earbuds.

The electrical device 1200 may include an audio input device 1224 (or corresponding interface circuitry, as discussed above). The audio input device 1224 may include any embedded or wired or wirelessly connected device that generates a signal representative of a sound, such as microphones, microphone arrays, or digital instruments (e.g., instruments having a musical instrument digital interface (MIDI) output). The electrical device 1200 may include a Global Navigation Satellite System (GNSS) device 1218 (or corresponding interface circuitry, as discussed above), such as a Global Positioning System (GPS) device. The GNSS device 1218 may be in communication with a satellite-based system and may determine a geolocation of the electrical device 1200 based on information received from one or more GNSS satellites, as known in the art.

The electrical device 1200 may include an other output device 1210 (or corresponding interface circuitry, as discussed above). Examples of the other output device 1210 may include an audio codec, a video codec, a printer, a wired or wireless transmitter for providing information to other devices, or an additional storage device.

The electrical device 1200 may include an other input device 1220 (or corresponding interface circuitry, as discussed above). Examples of the other input device 1220 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 1200 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1200 may be any other electronic device that processes data. In some embodiments, the electrical device 1200 may comprise multiple discrete physical components. Given the range of devices that the electrical device 1200 can be manifested as in various embodiments, in some embodiments, the electrical device 1200 can be referred to as a computing device or a computing system.

### EXAMPLES

Illustrative examples of the technologies disclosed herein are provided below. An embodiment of the technologies may include any one or more, and any combination of, the examples described below.

Example 1 includes a compute device comprising a processor; a memory coupled to the processor; and one or more computer-readable media comprising a plurality of instructions thereon that, when executed by the processor, cause the processor to perform a first write operation to blow one or more electronic fuses in the processor, wherein the one or more electronic fuses cannot be reset after being blown; perform a first plurality of read operations on the one or more electronic fuses after the first write operation; perform a second write operation on the one or more electronic fuses after the first plurality of read operations; and perform a second plurality of read operations on the one or more electronic fuses after the second write operation.

Example 2 includes the subject matter of Example 1, and wherein to perform the first plurality of read operations comprises to perform at least 1,000 read operations, wherein to perform the second plurality of read operations comprises to perform at least 1,000 read operations.

Example 3 includes the subject matter of any of Examples 1 and 2, and wherein to perform the first write operation comprises to install a firmware on the compute device, wherein to perform the second write operation comprises to reinstall the firmware on the compute device.

Example 4 includes the subject matter of any of Examples 1-3, and wherein the one or more electronic fuses comprises at least 500 electronic fuses.

Example 5 includes the subject matter of any of Examples 1-4, and wherein to perform the first plurality of read operations comprises to perform at least one read operation at a temperature below negative 30 degrees Celsius.

Example 6 includes the subject matter of any of Examples 1-5, and wherein to perform the first plurality of read operations comprises to perform at least one read operation at a temperature above 100 degrees Celsius.

Example 7 includes the subject matter of any of Examples 1-6, and wherein the second write operation is to take place at least one year after the first write operation.

Example 8 includes a method comprising performing a first write operation to blow one or more electronic fuses in a compute device, wherein the one or more electronic fuses cannot be reset after being blown; performing a first plurality of read operations on the one or more electronic fuses after the first write operation; performing a second write operation on the one or more electronic fuses after the first plurality of read operations; and performing a second plurality of read operations on the one or more electronic fuses after the second write operation.

Example 9 includes the subject matter of Example 8, and wherein performing the first plurality of read operations comprises performing at least 1,000 read operations, wherein performing the second plurality of read operations comprises performing at least 1,000 read operations.

Example 10 includes the subject matter of any of Examples 8 and 9, and wherein performing the first write operation comprises installing a firmware on the compute device, wherein performing the second write operation comprises reinstalling the firmware on the compute device.

Example 11 includes the subject matter of any of Examples 8-10, and wherein the one or more electronic fuses comprises at least 500 electronic fuses.

Example 12 includes the subject matter of any of Examples 8-11, and wherein performing the first plurality of read operations comprises performing at least one read operation at a temperature below negative 30 degrees Celsius.

Example 13 includes the subject matter of any of Examples 8-12, and wherein performing the first plurality of read operations comprises performing at least one read operation at a temperature above 100 degrees Celsius.

Example 14 includes the subject matter of any of Examples 8-13, and wherein the second write operation takes place at least one year after the first write operation.

Example 15 includes a compute device comprising means for performing a first write operation to blow one or more electronic fuses in a compute device, wherein the one or more electronic fuses cannot be reset after being blown; means for performing a first plurality of read operations on the one or more electronic fuses after the first write operation; means for performing a second write operation on the one or more electronic fuses after the first plurality of read operations; and means for performing a second plurality of read operations on the one or more electronic fuses after the second write operation.

Example 16 includes the subject matter of Example 15, and wherein the means for performing the first plurality of read operations comprises means for performing at least 1,000 read operations, wherein the means for performing the second plurality of read operations comprises means for performing at least 1,000 read operations.

Example 17 includes the subject matter of any of Examples 15 and 16, and wherein the means for performing the first write operation comprises means for installing a firmware on the compute device, wherein the means for performing the second write operation comprises means for reinstalling the firmware on the compute device.

Example 18 includes the subject matter of any of Examples 15-17, and wherein the one or more electronic fuses comprises at least 500 electronic fuses.

Example 19 includes the subject matter of any of Examples 15-18, and wherein the means for performing the first plurality of read operations comprises means for performing at least one read operation at a temperature below negative 30 degrees Celsius.

Example 20 includes the subject matter of any of Examples 15-19, and wherein the means for performing the first plurality of read operations comprises means for performing at least one read operation at a temperature above 100 degrees Celsius.

Example 21 includes the subject matter of any of Examples 15-20, and wherein the second write operation takes place at least one year after the first write operation.

Example 22 includes one or more computer-readable media comprising a plurality of instructions stored thereon that, when executed, causes a compute device to perform a first write operation to blow one or more electronic fuses in the compute device, wherein the one or more electronic fuses cannot be reset after being blown; perform a first plurality of read operations on the one or more electronic fuses after the first write operation; perform a second write operation on the one or more electronic fuses after the first plurality of read operations; and perform a second plurality of read operations on the one or more electronic fuses after the second write operation.

Example 23 includes the subject matter of Example 22, and wherein to perform the first plurality of read operations comprises to perform at least 1,000 read operations, wherein to perform the second plurality of read operations comprises to perform at least 1,000 read operations.

Example 24 includes the subject matter of any of Examples 22 and 23, and wherein to perform the first write operation comprises to install a firmware on the compute device, wherein to perform the second write operation comprises to reinstall the firmware on the compute device.

Example 25 includes the subject matter of any of Examples 22-24, and wherein the one or more electronic fuses comprises at least 500 electronic fuses.

Example 26 includes the subject matter of any of Examples 22-25, and wherein to perform the first plurality of read operations comprises to perform at least one read operation at a temperature below negative 30 degrees Celsius.

Example 27 includes the subject matter of any of Examples 22-26, and wherein to perform the first plurality of read operations comprises to perform at least one read operation at a temperature above 100 degrees Celsius.

Example 28 includes the subject matter of any of Examples 22-27, and wherein the second write operation is to take place at least one year after the first write operation.

## Claims

1. A compute device comprising:
a processor;
a memory coupled to the processor; and
one or more computer-readable media comprising a plurality of instructions thereon that, when executed by the processor, cause the processor to:
perform a first write operation to blow one or more electronic fuses in the processor, wherein the one or more electronic fuses cannot be reset after being blown;
perform a first plurality of read operations on the one or more electronic fuses after the first write operation;
perform a second write operation on the one or more electronic fuses after the first plurality of read operations; and
perform a second plurality of read operations on the one or more electronic fuses after the second write operation.

2. The compute device of claim 1, wherein to perform the first plurality of read operations comprises to perform at least 1,000 read operations, wherein to perform the second plurality of read operations comprises to perform at least 1,000 read operations.

3. The compute device of one of the previous claims, wherein to perform the first write operation comprises to install a firmware on the compute device, wherein to perform the second write operation comprises to reinstall the firmware on the compute device.

4. The compute device of one of the previous claims, wherein the one or more electronic fuses comprises at least 500 electronic fuses.

5. The compute device of one of the previous claims, wherein to perform the first plurality of read operations comprises to perform at least one read operation at a temperature below negative 30 degrees Celsius.

6. The compute device of one of the previous claims, wherein to perform the first plurality of read operations comprises to perform at least one read operation at a temperature above 100 degrees Celsius.

7. The compute device of one of the previous claims, wherein the second write operation is to take place at least one year after the first write operation.

8. A method comprising:
performing a first write operation to blow one or more electronic fuses in a compute device, wherein the one or more electronic fuses cannot be reset after being blown;
performing a first plurality of read operations on the one or more electronic fuses after the first write operation;
performing a second write operation on the one or more electronic fuses after the first plurality of read operations; and
performing a second plurality of read operations on the one or more electronic fuses after the second write operation.

9. The method of claim 8, wherein performing the first plurality of read operations comprises performing at least 1,000 read operations, wherein performing the second plurality of read operations comprises performing at least 1,000 read operations.

10. The method of claim 8 or 9, wherein performing the first write operation comprises installing a firmware on the compute device, wherein performing the second write operation comprises reinstalling the firmware on the compute device.

11. The method of claim 8, 9 or 10, wherein performing the first plurality of read operations comprises performing at least one read operation at a temperature below negative 30 degrees Celsius.

12. The method of claim 8, 9, 10 or 11, wherein performing the first plurality of read operations comprises performing at least one read operation at a temperature above 100 degrees Celsius.

13. The method of claim 8, 9, 10, 11 or 12, wherein the second write operation takes place at least one year after the first write operation.

14. A compute device comprising means for performing the method of any one of claims 8-13.

15. One or more computer-readable media comprising a plurality of instructions stored thereon that, when executed, causes a compute device to perform the method of any one of claims 8-13.
